Europäisches Patentamt

European Patent Office

Office européen des brevets

(11) Veröffentlichungsnummer: **0 474 992 A2**

# EUROPÄISCHE PATENTANMELDUNG

(21) Anmeldenummer: **91110448.7**

(22) Anmeldetag: **25.06.91**

(51) Int. Cl.5: **C05F 3/00**

(30) Priorität: **30.07.90 CS 3763/90**

(43) Veröffentlichungstag der Anmeldung:
**18.03.92 Patentblatt 92/12**

(84) Benannte Vertragsstaaten:
**AT BE DE FR IT NL**

(71) Anmelder: **MANEKO SPOLECNOST sr.o**
**Krohova 2231**
**CS-162 00 Praha(CS)**

(72) Erfinder: **MOSTECKY, Jiri**
**Praha 6**
**Na Petynce 32(CS)**
Erfinder: **Vasicek, Alois, Dipl. Ing.**
**Praha 1**
**Opletalova 35(CS)**
Erfinder: **Mayer, Josef**
**Jarosov nad Nezarkou,**
**Hlavni 182(CS)**
Erfinder: **Füllsack, Petr, Dipl. Ing.**
**Jindrichuv Hradec,**
**Sidliste Vajgar 680/3(CS)**

(74) Vertreter: **Patentanwälte Beetz sen. - Beetz**
**jun. Timpe - Siegfried - Schmitt-Fumian-**
**Mayr**
**Steinsdorfstrasse 10**
**W-8000 München 22(DE)**

(54) **Verfahren zur Behandlung von in Massenzucht von Vieh, insbesondere von Schweinen, Rind- und Federvieh, anfallender Gülle und nach diesem Verfahren hergestelltes Düngemittel mit geregelter Nährstoffdesorption.**

(57) Die Erfindung betrifft ein Verfahren zur Behandlung von Gülle, bei welchem die thixotropen Eigenschaften der Gülle durch Zusatz von Hemizellulosen und Zucker enthaltendem Calcium- oder Magnesiumlignosulfonat geändert werden und die derart aufbereitete, zum Teil desodorierte Gülle in mehreren Teilmengen auf ein organisches oder anorganisches Sorptionsmaterial aufgebracht wird, das zwischen den einzelnen Teilmengenzufuhren durchgemischt und durchgelüftet wird. Nach Aufbringen der gewünschten Güllemenge wird das entstandene Gemisch mit das Pflanzenwachstum günstig beeinflussenden Stoffen angereichert, und dieses Gemisch dient als Düngemittel mit geregelter Nährstoffdesorption, bestehend aus (nach Gewicht) 10 bis 50 Teilen geschroteten Abfällen auf Phytomassebasis, 30 bis 60 Teilen mit 1 bis 20 Teilen Calcium- oder Magnesiumlignosulfonat aufbereiteter Gülle, 0 bis 40 Teilen Kalkstein, 0 bis 20 Teilen Ammoniumsulfat und 0 bis 20 Teilen Phosphaten.

EP 0 474 992 A2

Die Erfindung betrifft ein Verfahren zur Behandlung von in Massenzucht von Vieh, insbesondere von Schweinen, Rind- und Federvieh anfallender Gülle, und ein nach diesem Verfahren hergestelltes Düngemittel mit geregelter Nährstoffdesorption.

Es ist derzeit vielfach üblich, Abfallgüllen direkt durch Zerstreuen auf landwirtschaftlich bestellte Grundstücke zu verwerten. Zu diesem Zweck wurde ein Verfahren zum effektiven Beschicken der Grundstücke mit diesen Abfällen erarbeitet, jedoch ist in der landwirtschaftlichen Praxis die Einhaltung der festgesetzten Harmonogramme aus verschiedenen Gründen schwer zu verwirklichen. Eine negative Folge dieses Zustands bildet die Notwendigkeit, die Abfälle zu lagern oder sie auf entfernte Grundstücke zu transportieren, was beides mit größerem ökonomischem Aufwand verbunden ist.

Die Aufbringung von flüssigen Güllen auf Grundstücke ist ferner mit weiteren negativen Erscheinungen verbunden. Es handelt sich vor allem um eine große ökologische Umweltbelastung und auch um eine Übersättigung der Grundstücke, auf welche die Gülle zerstreut wird, mit unzerlegten Gülleanteilen und mit Kalium, welches die Gülle bis zu 2 kg/m$^3$ enthält.

Ein bisher angewandtes Verfahren (siehe z. B. CS-Urheberschein No. 153 979) nützt zwar einen Minoritätsanteil der flüssigen Güllen aus, löst jedoch nicht die komplexe Ausnützung der anfallenden Tiergüllen in vollem Umfang.

Ein weiteres gegenwärtig bekanntes Verfahren zur Ausnützung anfallender Tiergüllen geht von den Erkenntnissen der Biotechnologien aus; dabei wird die Tiergülle auf anaerobe Weise mittels Fermentierung in Biogas, desodoriertes Fasergut und Abfallwasser, das jedoch noch weiter nachgereinigt werden muß, übergeführt. Auch dieses Verfahren löst jedoch die Verwertungsprobleme nicht in breitem Umfang; denn der Vorgang ist selbst, was die Investitions- und Betriebskosten betrifft, sehr aufwendig.

Die derzeit in der landwirtschaftlichen Praxis angewandten anorganischen Düngemittel werden zumeist von aus Ionen der Bioelemente zusammengesetzten Salzen gebildet. Diese Bioelemente lösen sich nach Einbringung in den Boden durch Einwirkung von Nässe und atmosphärischen Bedingungen auf. Infolge der Auflösung der Salze wächst die Ionenkonzentration im Boden an. Einen wichtigen Faktor für die Effektivität der Durchführung des Düngevorganges bildet die Sorptionskapazität des Bodens zur Festhaltung dieser Ionen. Die Retentionskapazität des Bodens ist in entscheidender Weise vom Gehalt an Huminstoffen im Boden abhängig, wobei man beim erhöhten Verhältnis der Zuführung der Ionendünger zu derjenigen der Mineraldünger eine weitere negative Erscheinung, nämlich eine höhere Zersetzungsstufe der Huminanteile, und dadurch auch eine Herabsetzung der Sorptionskapazität des Bodens feststellt.

Der Erfindung liegt die Aufgabe zugrunde, ein Verfahren zur Behandlung von in Massenzucht von Vieh, insbesondere von Schweinen, Rind- und Federvieh, anfallender Gülle zu entwickeln, um ein danach hergestelltes Düngemittel mit geregelter Nährstoffdesorption mit relativ niedrigen Investitions- und Betriebskosten zu gewinnen und dadurch eine ökologische Umweltbelastung zu vermeiden.

Diese Aufgabe wird erfindungsgemäß durch das Verfahren nach dem Patentanspruch 1 bzw. den Kunstdünger nach dem Patentanspruch 7 gelöst.

Es wurde als notwendig befunden, vor der eigentlichen Sorption die Beschaffenheit der Gülle zu ändern, da bei einer Sorption von nichtbehandelter Gülle das Verhältnis zwischen der Gülle und dem Sorptionsmaterial ungünstig ist und die Menge der zur Behandlung benötigten Materialien unverhältnismäßig hoch wäre.

Die Gülleaufbereitung besteht im Zusetzen einer eingedickten, Hemizellulose und Zucker enthaltenden Calzium- oder Magnesiumlignosulfonatlösung, am besten bei besonders vorteilhafter Durchführung in der Form von entsprechenden Sulfitablaugen. Diese Lösung wird je nach Bedarf in einer Menge von 3 bis 25 % zugesetzt, wobei gleichzeitig eine wesentliche Verminderung des unangenehmen Güllegeruchs erreicht wird. Es ist augenscheinlich, daß bei Verwendung von Magnesiumlignosulfonat Magnesium als wichtiges biologisches Element in das System eingeführt wird.

Bei der konkreten Durchführung des erfindungsgemäßen Verfahrens wird derart vorgegangen, daß die Gülle, deren thixotrope Eigenschaften durch Zusatz von Lignosulfonat geändert wurden, den vorgelegten Sorptionsmaterialien sukzessiv zugesetzt wird, wobei zwischen den einzelnen Zusätzen das aus dem Sorptionsmaterial und der Gülle bestehende Gemisch auf mechanische Weise durchgelüftet wird. Die errechnete Menge an Gülle wird vorteilhaft in vier oder fünf Teilmengen zugesetzt. Die praktische Durchführung des erfindungsgemäßen Verfahrens besteht in der Aufschichtung der Sorptionsmaterialien auf die Behandlungsfläche in einer Höhe von etwa 50 cm, und die Gülle wird, nach vorheriger Änderung der thixotropen Eigenschaften, mittels fahrbarer Zisternen, die sie auf diese Fläche verspritzen, dosiert. Zum Erhöhen des Sorptionseffektes der aufbereiteten Gülle am Sorptionsmaterial und zum Einarbeiten von Luft in das System wird das Gemisch mittels leichter, in der Pflanzenproduktion üblicher Kultivationstechnik, wie z. B. mittels eines Rotationsauflockerers, Rotationsscheiben, Pflüge usw., durchgemischt. Dieses Durchmischen wird so durchgeführt, daß über die Behandlungsfläche ein die erwähnte Einrichtung tragender Traktor hin- und herfährt.

Bei dem erfindungsgemäßen Verfahren ist es vorteilhaft, in der Pflanzenproduktion sich günstig erweisende feste Zusatzkomponenten, wie z. B. Kalkstein, eine bestimmte Menge an anorganischen Nährstoffen und gegebenenfalls auch an Spurenelementen, im Laufe der Vorbereitung oder nach Zusatz der letzten Teilmenge der aufbereiteten Gülle über die ganze Behandlungsfläche zu verstreuen und nachher das entstandene Gemisch in der oben beschriebenen Weise zu homogenisieren.

Als organische Sorptionsmaterialien werden verschiedene, bei der Pflanzenproduktion anfallende Abfälle, vor allem verschiedene Strohsorten, Maiskolben, Baumrinde, besonders Kieferrinde, desintegrierte Holzmasse u. ä., verwendet. Als anorganische Sorptionsmaterialien werden Bentonit, Zeolithe, Löß, Zypriston, Huminsäuren, Oxihumolite und biologisch einwandfreie desintegrierte städtische Abfälle verwendet. Während organische Sorptionsmaterialien und Lignosulfonate im Boden in Humus umgesetzt werden, werden anorganische Komponenten nach Einbringung in den Boden zu wertvollen Bodenkomponenten, die sich z. B. beim Ionenaustausch, bei der Erhöhung der Bodenfähigkeit, Nässe zu binden, bewähren oder die Bodenerosionsbeständigkeit erhöhen.

Das fertige Produkt wird zweckmäßig auf einem Feldabladeplatz gelagert, wo man es fermentativ nachreifen läßt. Als Ergebnis erhält man ein erfindungsgemäßes organisches Düngemittel mit Mineralzusätzen.

Der erfindungsgemäß hergestellte anorganische Mineraldünger enthält 10 bis 50 Gewichtsteile desintegrierte Abfälle auf Phytomassebasis, 30 bis 60 Gewichtsteile Gülle, 1 bis 20 Gewichtsteile Calcium- oder Magnesiumlignosulfonat, enthaltend 1 bis 10 % Hemizellulosen und Zucker, 0 bis 40 Gewichtsteile Kalkstein oder Kalk, 0 bis 20 Gewichtsteile Harnstoff, 0 bis 20 Gewichtsteile Ammoniumsulfat und 0 bis 10 Teile Abfallphosphate.

Der erfindungsgemäße Dünger enthält Stoffe, die die Sorptionsfähigkeit des Bodens erhöhen, besonders durch Erhöhung des Gehaltes an Humin im Boden, und ist in vorteilhafter Ausführung Träger von Bioelementen in optimaler Struktur und in gebundener Form, wobei die Anteile der einzelnen Abfallstoffe und der weiteren Komponenten aufgrund der Ergebnisse langfristiger Versuche mit Ertragserhöhung landwirtschaftlicher Produkte sowie der Ergebnisse der Verfolgung der Bodensorptionsfähigkeit einschließlich der Feststellung der wasserextraktionsfähigen Ionenteile festgesetzt wurden. Außer der Verwendung von Abfallstoffen, die sonst schwierig verarbeitet werden können, stellt der erfindungsgemäße Dünger auch eine Substanz dar, die keine schädlichen Wirkungen auf die Bodenzusammensetzung und auf unter- und obertägige Gewässer hat, da die Nährstoffe nur durch Einwirkung der Pflanzenwurzelsysteme und Bodenmikroorganismen sukzessive freigegeben werden, so daß es zu keiner Freigabe in die Umgebung kommt. Der erfindungsgemäße Dünger ist daher, vor allem in ökologischer Hinsicht, sehr vorteilhaft.

Beispiel 1

Eine Fläche von 0,5 Ar wurde mit einem Gemisch aus gehacktem Rapsstroh und Sägemehl im Gewichtsverhältnis 2 : 1 in einer Gesamtmenge von 500 kg derart beschichtet, daß die Schichthöhe 50 cm nicht überschritt. Auf diese Schicht wurde Schweinegülle aufgebracht, deren thixotrope Eigenschaften durch Zusatz von 5 % Calciumlignosulfonat mit Gehalt an Hemizellulosen und Zuckern in Form von Sulfitablauge geändert wurden. Der Zusatz erfolgte in fünf Teilmengen. Zwischen den einzelnen Teilzugaben wurde das Gemisch mit Hilfe eines von einem Kleintraktor getragenen Drehgrubbers durchgemischt. Nach dem letzten Teilzusatz, als die Gesamtmenge der aufbereiteten Gülle 1.100 kg betrug, wurde die Schicht mit 30 kg Kalkstein und 25 kg Ammoniumsulfat bestreut. Das Gemisch wurde wieder mit dem Drehgrubber durchgemischt. Nachher wurde das Gemisch auf einen Haufen gerecht, wo es 6 Monate lang belassen wurde, bis es nach Ende der Vegetationsperiode möglich war, es in den Boden einzuarbeiten.

In zweiwöchentlichen Zeitabständen wurden dem Haufen Proben zwecks Verfolgung der Menge der mit Wasser extrahierbaren Anteile an Stickstoffverbindungen entnommen. Während unmittelbar nach der Herstellung der extrahierte Stickstoffanteil 0,5 % betrug, sank er schon nach vierzehn Tagen auf 0,1 %. An weiteren Terminen bewegte er sich schon an der experimentellen Fehlergrenze der Methode.

Die langfristige Wirkung des Düngers wurde bei seiner Aufbringung in einer Menge von 25 kg/Ar auf eine Parzelle von 5 Ar Ausmaß verfolgt. Die Nachbarparzellen dienten als Referenzparzellen für die Ertragsauswertung einiger landwirtschaftlicher Produkte. Das Experiment wurde vier Jahre lang fortgesetzt, wobei die für den Versuch verwendete Parzelle am Anfang des Versuches gedüngt wurde, wogegen die Referenzparzelle jährlich ungefähr 10 kg/Ar NPK-Dünger erhielt. Die Erträge der beiden Parzellen nach Umrechnen auf Flächeneinheit waren vergleichbar. Die Differenz überschritt nicht 5 %.

Beispiel 2

Auf eine Fläche von 18 Ar Ausmaß wurden 22 Tonnen Geflügeleinstreu auf Basis von Geflügelkot enthaltenden Holzspänen und Sägemehl verteilt. Die auf diese Weise entstandene Behandlungsfläche wurde sukzessiv mit 25 m$^3$ Schweinegülle bespritzt, die vorher im Schweinestallsammelbehälter mit 5 % Sulfitablauge auf Basis von 50 %igem Calziumlignosulfonat vermischt wurde. Zwischen den einzelnen Teilmengenzufuhren wurde die Parzelle mit Rotationsscheiben umgeackert. Nach der letzten Teilmenge wurde die Parzelle aus einer Zisterne mit pulverigem gemahlenem Kalkstein in einer Menge von 2,5 Tonnen bestreut. Nach Homogenisierung des Kalkstein enthaltenden Gemisches wurde die entstandene Masse auf einen Haufen gerecht und von hier zum Teil auf einen Feldabladeplatz gebracht, zum anderen Teil mit Hilfe eines Düngerstreuers auf einem Feld zerstreut, wo sie eingeackert wurde.

Beispiel 3

Auf eine Fläche von 23 Ar Ausmaß wurde Stroh, auf bis 25 cm Länge gehackt, verstreut. Die Schichthöhe betrug 30 bis 50 cm. Diese Schicht wurde wie im Beispiel 1 mit Rindviehgülle in fünf Teilmengen bespritzt. Zwischen den einzelnen Teilmengen wurde die Schicht mit Hilfe eines Drehgrubbers durchgemischt. Nach der letzten Teilmenge wurde das entstandene Gemisch mit Kalkstein und einer kleinen Menge Superphosphat bestreut. Das entstandene Gemisch wurde nach Durchmischen auf einen Feldabladeplatz gefahren. Zusammensetzung der Gemische: Gülleaufbereitung - 3 % Magnesiumsulfitablauge, 8 % Trockensubstanz. Das entstandene Gemisch enthielt: 60 % flüssige Anteile, 40 % Trockensubstanz. Kalksteinmenge: 1,8 %.

**Patentansprüche**

1. Verfahren zur Behandlung von in Massenzucht von Vieh, insbesondere von Schweinen, Rind- und Federvieh, anfallender Gülle,

   **dadurch gekennzeichnet,**

   daß die Abfallgülle in Homogenisierungsbehältern mit Hemizellulosen und Zucker enthaltenden Calzium- oder Magnesiumsulfonaten vermischt und nach Homogenisierung auf organische oder anorganische Sorptionsmaterialien und/oder auf deren Gemische vorzugsweise in mehreren Teilmengen aufgebracht wird, wobei zwischen dem Aufbringen der einzelnen Teilmengen das entstandene Gemisch homogenisiert und durchgelüftet wird.

2. Verfahren nach Anspruch 1, dadurch gekennzeichnet, daß als das Hemizellulosen und Zucker enthaltende Calzium- oder Magnesiumlignosulfonat entsprechende eingedickte Sulfitablaugen verwendet werden.

3. Verfahren nach Anspruch 1, dadurch gekennzeichnet, daß als organische Sorptionsmaterialien Abfallprodukte auf Phytomassebasis, die aus der Gruppe Stroh, Maiskolben, Baumrinde, insbesondere desintegrierte Kieferrinde, und Holzmasse gewählt sind, verwendet werden.

4. Verfahren nach Anspruch 1, dadurch gekennzeichnet, daß als anorganische Sorptionsmaterialien Stoffe, die aus der Gruppe Bentonit, Zeolith, Löß, Lehm, insbesondere Zyprislehm, Huminsäuren, Oxihumolite und biologisch einwandfreie desintegrierte städtische Abfälle gewählt sind, verwendet werden.

5. Verfahren nach Anspruch 1, dadurch gekennzeichnet, daß während der Vorbereitung oder nach deren Beendigung in das Gemisch weitere, für die Pflanzenproduktion vorteilhafte, aus der Gruppe Kalkstein, Düngemittel gewählte Materialien eingearbeitet werden.

6. Verfahren nach Anspruch 1, dadurch gekennzeichnet, daß je nach den verwendeten Materialien das fertige Produkt als Düngemittel direkt nach seiner Herstellung auf ein Feld aufgebracht oder vorzugsweise zunächst auf einem Feldabladeplatz belassen wird, um es eine gewisse Zeit fermentieren zu lassen.

7. Kunstdünger, der gemäß Verfahren nach Anspruch 1 hergestellt ist,

   **dadurch gekennzeichnet,**

   daß er 10 bis 50 Gewichtsteile desintegrierte Abfallphytomasse, 30 bis 60 Gewichtsteile Gülle, die mit 1 bis 20 Gewichtsteilen Calzium- oder Magnesiumlignosulfonat, das 1 bis 10 % Hemizellulosen und Zucker enthält, aufbereitet wurde, 0 bis 40 Gewichtsteile Kalkstein, 0 bis 20 Gewichtsteile Harnstoff, 0 bis 20 Gewichtsteile Ammoniumsulfat und 0 bis 10 Gewichtsteile Abfallphosphate enthält.

8. Kunstdünger nach Anspruch 7, dadurch gekennzeichnet,

daß er mindestens eine Phytomassesubstanz enthält, die aus der Gruppe Rinde, Holzsägemehl, Maisschäfte, Maiskolben, Stroh und Rapsstroh gewählt ist.